# EUROPEAN PATENT APPLICATION

(11) **EP 4 366 386 A1**
(43) Date of publication of application: **08.05.2024**
(21) Application number: 22832119.6
(22) Date of filing: 29.06.2022
(51) Int. Cl.: H04W 40/24, H04W 72/04

(54) **INFORMATION NOTIFICATION METHOD, CONTROLLER AND STORAGE MEDIUM**

(30) Priority: 30.06.2021 CN 202110739038
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: FU, Yuexia, Beijing 100053 (CN); YAO, Huijuan, Beijing 100053 (CN); SUN, Tao, Beijing 100053 (CN)
(74) Representative: GPI Brevets
(86) International application number: PCT/CN2022/102431
(87) International publication number: WO 2023/274307

(57) **Abstract**

The present disclosure provides an information advertisement method, a controller and a storage medium. The information advertisement method includes: determining, by a central controller, an advertisement domain; and advertising, by the central controller, a node in the advertisement domain of computing information. According to the present disclosure, it is able to reduce the amount of futile notification information in a network, and achieve fine management on a notification range of network information, thereby to improve a network resource utilization rate and an active bandwidth utilization rate.

## Description

### CROSS-REFERENCE TO RELATED APPLICATION

This application claims a priority of the Chinese patent application No. 202110739038.0 filed on June 30, 2021, which is incorporated herein by reference in its entirety.

### TECHNICAL FIELD

The present disclosure relates to the field of communication technology, in particular to an information advertisement method, a controller and a storage medium.

### BACKGROUND

Currently, such concepts as computing node topology and computing status topology have been defined in some schemes, and through defining a computing enable information identifier, a router is connected to a computing node so as to generate the computing node topology. However, computing service information about the node is not advertised. In an existing scheme, the service information and the computing status information are advertised in a binding manner.

In addition, in an existing computing advertisement scheme, a computing status is advertised over an entire network through an extended Border Gateway Protocol (BGP), and a notification range is not defined. All routers need to maintain the computing service information on the entire network, and a routing table is too large, which causes a burden to the network and the routers.

Hence, the downside of the related art lies in that the information notification amount in the network increases for the existing computing advertisement scheme.

### SUMMARY

An object of the present disclosure is to provide an information advertisement method, a controller and a storage medium, so as to reduce the information notification amount in the computing advertisement.

The present disclosure provides the following technical solutions.

In one aspect, the present disclosure provides in some embodiments an information advertisement method, including: determining, by a central controller, an advertisement domain; and advertising, by the central controller, a node in the advertisement domain of computing information.

In some possible embodiments of the present disclosure, the central controller determines the advertisement domain in accordance with a computing service topology. The computing service topology is generated through: generating service topology information including computing service identification information and location information about computing service deployment, and advertising the service topology information; and advertising status information about a service on an established service topology.

In some possible embodiments of the present disclosure, the service topology information is advertised through a BGP-Link State (BGP-LS) and a Dynamic Host Configuration Protocol (DHCP).

In some possible embodiments of the present disclosure, the service topology information is advertised between nodes after computing service information is added in a node attribute field.

In some possible embodiments of the present disclosure, the computing service topology is generated in accordance with a network topology and a computing node topology generated through the BGP-LS.

In some possible embodiments of the present disclosure, the information advertisement method further includes, when a service request needs to be scheduled, selecting, by the central controller, a computing node which needs to obtain real-time service status information through the generated computing service topology, and sending a detection packet of service status information.

In some possible embodiments of the present disclosure, adjacent domains are divided as the advertisement domain in accordance with a geographical location, and/or domains where a same service is deployed are divided as the advertisement domain with the service as a dimension.

In some possible embodiments of the present disclosure, when the advertisement domain is divided in accordance with the geographical location, a notification relation between Autonomous System (AS) domains in an Internet Protocol (IP) is determined in accordance with the existing division of the AS domains.

In some possible embodiments of the present disclosure, the information advertisement method further includes obtaining, by the central controller, an AS domain division policy for an entire network, and determining a size of the advertisement domain in accordance with network status information about different domains, and the network status information is reported by a node to the central controller.

In some possible embodiments of the present disclosure, when determining the size of the advertisement domain, the advertisement domain is expanded in the case of a good network status and reduced in the case of a bad network status in accordance with the network status information.

In some possible embodiments of the present disclosure, when the advertisement domain is divided in accordance with the service, the size of the advertisement domain is determined in accordance with the number of nodes deployed in the advertisement domain.

In some possible embodiments of the present disclosure, the information advertisement method further includes issuing an advertisement domain division policy carried in Netconf and a Yang management protocol.

In some possible embodiments of the present disclosure, the advertisement domain division policy is generated after the central controller has received the network status information, the service deployment information and a capability list generated by an inter-domain router and has subscribed the network status information or the service deployment information about a node in accordance with different advertisement domain division policies, and issued to the inter-domain router for configuration.

In some possible embodiments of the present disclosure, when adjusting the size of the advertisement domain, the information advertisement method further includes issuing an advertisement domain adjustment policy carried in Netconf and the Yang management protocol in accordance with one or more of the network status information, result feedback information about service scheduling, or a service deployment condition.

In some possible embodiments of the present disclosure, a range of the advertisement domain is identified through: setting the number of ASs through which computing update information passes, and identifying the range of the advertisement domain through setting a hop limit; or identifying the range of the advertisement domain through dividing routers for a same advertisement domain as a same community in accordance with a BGP community identity.

In another aspect, the present disclosure provides in some embodiments a controller, including: a processor configured to read a program in a memory so as to determine an advertisement domain and notify a node in the advertisement domain of computing information; and a transceiver configured to transmit and receive data under the control of the processor.

In some possible embodiments of the present disclosure, the central controller determines the advertisement domain in accordance with a computing service topology. The computing service topology is generated through: generating service topology information including computing service identification information and location information about computing service deployment, and advertising the service topology information; and advertising status information about a service on an established service topology.

In some possible embodiments of the present disclosure, the service topology information is advertised through a BGP-LS and a DHCP.

In some possible embodiments of the present disclosure, the service topology information is advertised between nodes after computing service information is added in a node attribute field.

In some possible embodiments of the present disclosure, the computing service topology is generated in accordance with a network topology and a computing node topology generated through the BGP-LS.

In some possible embodiments of the present disclosure, the processor is further configured to, when a service request needs to be scheduled, select a computing node which needs to obtain real-time service status information through the generated computing service topology, and send a detection packet of service status information.

In some possible embodiments of the present disclosure, adjacent domains are divided as the advertisement domain in accordance with a geographical location, and/or domains where a same service is deployed are divided as the advertisement domain with the service as a dimension.

In some possible embodiments of the present disclosure, when the advertisement domain is divided in accordance with the geographical location, a notification relation between AS domains in an IP is determined in accordance with existing division of the AS domains.

In some possible embodiments of the present disclosure, the processor is further configured to obtain an AS domain division policy for an entire network, and determine a size of the advertisement domain in accordance with network status information about different domains, and the network status information is reported by a node to the central controller.

In some possible embodiments of the present disclosure, when determining the size of the advertisement domain, the advertisement domain is expanded in the case of a good network status and reduced in the case of a bad network status in accordance with the network status information.

In some possible embodiments of the present disclosure, when the advertisement domain is divided in accordance with the service, the size of the advertisement domain is determined in accordance with the number of nodes deployed in the advertisement domain.

In some possible embodiments of the present disclosure, the processor is further configured to issue an advertisement domain division policy carried in Netconf and a Yang management protocol.

In some possible embodiments of the present disclosure, the advertisement domain division policy is generated after the central controller has received the network status information, the service deployment information and a capability list generated by an inter-domain router and has subscribed the network status information or the service deployment information about a node in accordance with different advertisement domain division policies, and issued to the inter-domain router for configuration.

In some possible embodiments of the present disclosure, when adjusting the size of the advertisement domain, the processor is further configured to issue an advertisement domain adjustment policy carried in Netconf and the Yang management protocol in accordance with one or more of the network status information, result feedback information about service scheduling, or a service deployment condition.

In some possible embodiments of the present disclosure, a range of the advertisement domain is identified through: setting the number of ASs through which computing update information passes, and identifying the range of the advertisement domain through setting a hop limit; or identifying the range of the advertisement domain through dividing routers for a same advertisement domain as a same community in accordance with a BGP community identity.

In yet another aspect, the present disclosure provides in some embodiments a controller, including: a notification module configured to determine an advertisement domain; and a notification module configured to notify a node in the advertisement domain of computing information.

In some possible embodiments of the present disclosure, the determination module is further configured to determine the advertisement domain in accordance with a computing service topology. The computing service topology is generated through: generating service topology information including computing service identification information and location information about computing service deployment, and advertising the service topology information; and advertising status information about a service on an established service topology.

In some possible embodiments of the present disclosure, the notification module is further configured to notify the service topology information through a BGP-LS and a DHCP.

In some possible embodiments of the present disclosure, the notification module is further configured to notify the service topology information nodes after computing service information is added in a node attribute field.

In some possible embodiments of the present disclosure, the determination module is further configured to generate the computing service topology in accordance with a network topology and a computing node topology generated through the BGP-LS.

In some possible embodiments of the present disclosure, the notification module is further configured to, when a service request needs to be scheduled, select a computing node which needs to obtain real-time service status information through the generated computing service topology, and send a detection packet of service status information.

In some possible embodiments of the present disclosure, the determination module is further configured to divide adjacent domains as the advertisement domain in accordance with a geographical location, and/or divide domains where a same service is deployed as the advertisement domain with the service as a dimension.

In some possible embodiments of the present disclosure, the notification module is further configured to, when the advertisement domain is divided in accordance with the geographical location, determine a notification relation between AS domains in an IP in accordance with the existing division of the AS domains.

In some possible embodiments of the present disclosure, the determination module is further configured to obtain an AS domain division policy for an entire network, and determine a size of the advertisement domain in accordance with network status information about different domains, and the network status information is reported by a node to the central controller.

In some possible embodiments of the present disclosure, the determination module is further configured to, when determining the size of the advertisement domain, expand the advertisement domain in the case of a good network status and reduce the advertisement domain in the case of a bad network status in accordance with the network status information.

In some possible embodiments of the present disclosure, the determination module is further configured to, when the advertisement domain is divided in accordance with the service, determine the size of the advertisement domain in accordance with the number of nodes deployed in the advertisement domain.

In some possible embodiments of the present disclosure, the notification module is further configured to issue an advertisement domain division policy carried in Netconf and a Yang management protocol.

In some possible embodiments of the present disclosure, the notification module is further configured to generate the advertisement domain division policy after the central controller has received the network status information, the service deployment information and a capability list generated by an inter-domain router and has subscribed the network status information or the service deployment information about a node in accordance with different advertisement domain division policies, and issue the advertisement domain division policy to the inter-domain router for configuration.

In some possible embodiments of the present disclosure, the notification module is further configured to, when adjusting the size of the advertisement domain, issue an advertisement domain adjustment policy carried in Netconf and the Yang management protocol in accordance with one or more of the network status information, result feedback information about service scheduling, or a service deployment condition.

In some possible embodiments of the present disclosure, the notification module is further configured to identify a range of the advertisement domain through: setting the number of ASs through which computing update information passes, and identifying the range of the advertisement domain through setting a hop limit; or identifying the range of the advertisement domain through dividing routers for a same advertisement domain as a same community in accordance with a BGP community identity.

In still yet another aspect, the present disclosure provides in some embodiments a computer-readable storage medium storing therein a computer program. The computer program is executed to implement the above-mentioned information advertisement method.

The present disclosure has the following beneficial effects.

In the related art, service information and computing status information are advertised in a binding manner, and a computing status is advertised over an entire network through an extended BGP, so all routers need to maintain the computing service information on the entire network, and a routing table is too large, which causes a burden to the network and the routers.

In the embodiments of the present disclosure, the advertisement domain is determined at first, and the computing information is merely advertised to the node in the advertisement domain. In other words, a service topology is decoupled from a computing topology, so as to provide a scheduling basis for a computing perception network in the service dimension. In addition, the computing information is advertised on a domain basis, and the range and region where the computing information is advertised are taken into consideration, so as to reduce the amount of futile notification information in the network, and achieve fine management on a notification range of the network information, thereby to improve a network resource utilization rate and an active bandwidth utilization rate.

Further, when the service topology is decoupled from the computing topology, the network obtains deployment information about the services on the entire network at first, without any necessity to know real-time status information about the service. When there is a service request, the network obtains the service status information in time, so it is able to reduce the amount of information in the network.

Further, after the generation of the service topology, the division of the advertisement domain is performed in accordance with a service delay requirement or performed with the service as a dimension, so as to facilitate the subsequent notification on a domain basis.

Furthermore, through the notification on a domain basis, it is able to notify the service information accurately, and reduce the amount of futile notification information in the network, thereby to improve the network resource utilization rate.

### BRIEF DESCRIPTION OF THE DRAWINGS

The following drawings are provided to facilitate the understanding of the present disclosure, and constitute a portion of the description. These drawings and the following embodiments are for illustrative purposes only, but shall not be construed as limiting the present disclosure. In these drawings,
FIG. 1 is a schematic view showing service topology information and a service status topology in the related art;
FIG. 2 is a flow chart of an information advertisement method according to one embodiment of the present disclosure;
FIG. 3 is a schematic view showing a computing node topology and a computing service topology according to one embodiment of the present disclosure;
FIG. 4 is a schematic view showing a BGP node flag field according to one embodiment of the present disclosure;
FIG. 5 is a schematic view showing the division of advertisement domains in accordance with AS domains according to one embodiment of the present disclosure;
FIG. 6 is a schematic view showing a relationship between a controller and inter-domain routers according to one embodiment of the present disclosure;
FIG. 7 is a schematic view showing the interaction between a device (network device) and a controller (a central controller) through NETCONF/YANG according to one embodiment of the present disclosure; and
FIG. 8 is a schematic view showing the controller according to one embodiment of the present disclosure.

### DETAILED DESCRIPTION

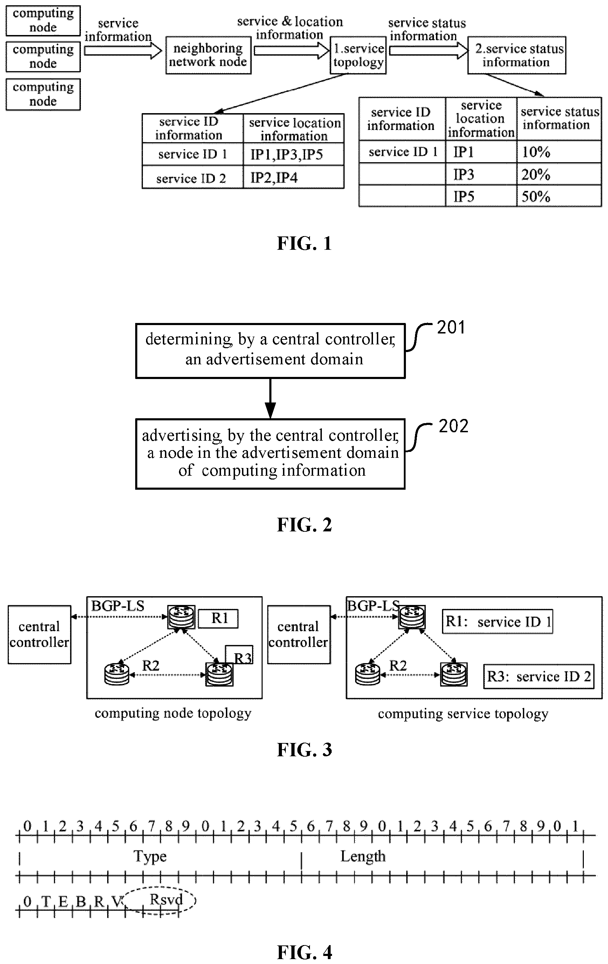

It is found that, as shown in FIG. 1, which illustratively shows service topology information and a service status topology, in an actual scenario, an ingress gateway obtains real-time information about a service for the subsequent selection in accordance with information about service deployment on each node. However in an existing scheme, the establishment of a service topology is not taken into consideration. At this time, a computing topology has low availability, and the information notification amount in a network increases.

In addition, a distance is also taken into consideration for service scheduling in the computing perception network. Usually, information is advertised among several neighboring nodes where a same service is deployed, and remote nodes may not participate in the scheduling. Due to the computing information advertised over the entire network in a flooding manner, the information amount in the entire network increases, and thereby a routing table to be maintained by routers in the network turns out to be too large. As a result, the routing computation complexity increases, and the routing convergence slows down.

Hence, in the embodiments of the present disclosure, the computing topology, the service topology and a computing status topology are decoupled from each other. The service topology is established at first, and then advertised over the entire network. A notification range of computing status information is defined, so as to reduce the information notification amount in the network as well as the information amount in the routing table.

In the embodiments of the present disclosure, a central controller refers to a controller for controlling nodes in an advertisement domain, or a controller having such functions as information perception, information collection, and strategy generation and issuance.

The present disclosure will be described hereinafter in conjunction with the embodiments and drawings.

As shown in FIG. 2, the present disclosure provides in some embodiments an information advertisement method, which includes: Step 201 of determining, by a central controller, an advertisement domain; and Step 202 of advertising, by the central controller, a node in the advertisement domain of computing information.

FIG. 3 illustratively shows a computing node topology and a computing service topology. As shown in FIG. 3, in a scheme of advertising the computing information on a domain basis according to the embodiments of the present disclosure, a service topology is defined at first, and then the service topology is decoupled from a computing topology. The advertisement domain for the computing information is defined in accordance with the service topology, and the information is advertised merely in the advertisement domain, so as to reduce the futile computing advertisement information in a network. The following description will be given hereinafter in two parts, i.e., the generation of the computing service topology and the notification on a domain basis.

### 1. Generation of the computing service topology.

During the implementation, the central controller determines the notification field in accordance with the computing service topology. The generation of the computing service topology includes: generating service topology information including computing service identification information and location information about computing service deployment, and advertising the service topology information; and advertising status information about a service on an established service topology.

To be specific, the computing service topology is generated in two steps. In a first step, the service topology information is generated, and it includes the service identification information and the location information about the service deployment. A computing node notifies the service identification information about a service deployed on the node, e.g., service ID information, through a BGP-LS and a DHCP protocol. In other words, during the implementation, the service topology information is advertised through the BGP-LS and the DHCP.

In a second step, the status information about the service is advertised on the established service topology. The status information about the service is further advertised through a BGP/Interior Gateway Protocol (IGP).

The description will be given hereinafter.

During the implementation, the computing service topology is generated in accordance with a network topology and a computing node topology generated through the BGP-LS.

To be specific, the computing service topology is further generated in accordance with the network topology and the computing node topology generated through the BGP-LS.

### Computing node topology

When the BGP-LS collects topology information generated by an Open Shortest Path First (OSPF)/ Intermediate System-to-Intermediate System (IS-IS), it fills computing enable information into a node attribute field in accordance with the computing information carried in a link, so as to generate the computing node topology. The controller (central controller) obtains the computing node topology in advance, without any necessity to obtain real-time computing status information.

### Computing service topology

During the implementation, the service topology information is advertised between nodes after the computing service information is added in the node attribute field.

To be specific, the computing service information is carried in an extended BGP-LS. Computing service deployment information about each node is identified, the computing service information (e.g., service ID information) is added in the node attribute field, and then the computing service information is advertised between the nodes, so as to establish the computing service topology at first. FIG. 4 shows a BGP node flag field. As shown in FIG. 4, an Rsvd (reserved) field is used to indicate the computing service information about the node.

During the implementation, the information advertisement method further includes, when a service request needs to be scheduled, selecting, by the central controller, a computing node which needs to obtain real-time service status information through the generated computing service topology, and sending a detection packet of service status information.

To be specific, when the controller (the central controller) needs to schedule a certain service request, it selects the computing node which needs to obtain the real-time service status information through the generated computing service topology, and sends the detection packet of service status information.

### 2. Notification on a domain basis.

A distance needs to be taken into consideration during the scheduling of the node, so an optimum node is selected preferentially within a short range. After the generation of the service topology information, the detailed service status information is advertised among limited domains so as to meet the service scheduling demand.

Hence, a domain-based information notification scheme is defined, and it includes defining and issuing an advertisement domain division policy, and identifying the advertisement domain.

### (1) Division of a notification range

During the implementation, adjacent domains are divided as the advertisement domain in accordance with a geographical location, and/or domains where a same service is deployed are divided as the advertisement domain with the service as a dimension.

To be specific, adjacent domains are identified as an advertisement domain in accordance with the geographical location, and the service status information is advertised within the advertisement domain. Alternatively, the domains where a same service is deployed are identified as an advertisement domain with the service as a dimension.

During the implementation, when the advertisement domain is divided in accordance with the geographical location, a notification relation between AS domains in an IP is determined in accordance with the existing division of the AS domains.

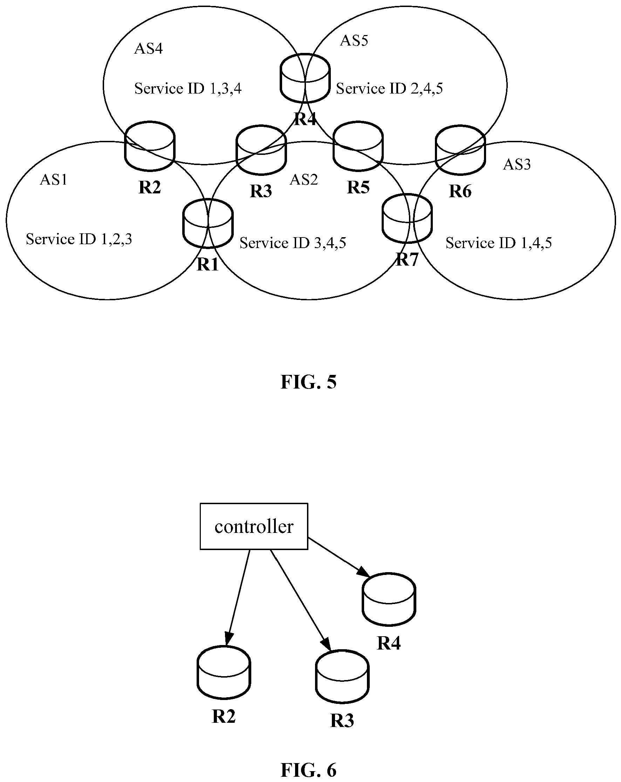

In a possible embodiment of the present disclosure, the notification relation between the AS domains is determined in accordance with the existing division of the AS domains in the IP, and FIG. 5 shows the division of the advertisement domains in accordance with the AS domains.

The central controller determines the division of the advertisement domain as follows.

FIG. 6 illustratively shows a relationship between a controller and inter-domain routers, where R represents the inter-domain router, and the controller corresponds to the above-mentioned central controller. The following description will be given on the basis of the network.

The advertisement domain is divided in accordance with network status information.

During the implementation, the central controller obtains an AS domain division policy for the entire network, and determines a size of the advertisement domain in accordance with the network status information about different domains. The network status information is reported by a node to the central controller.

To be specific, the central controller obtains the AS domain division policy for the entire network, and then defines the size of the advertisement domain in accordance with network statuses in different domains. The network needs to report the network status information about the AS domains to the central controller.

During the implementation, when determining the size of the advertisement domain, the advertisement domain is expanded in the case of a good network status and reduced in the case of a bad network status in accordance with the network status information.

To be specific, when the network status in a region is good and a network delay is low, the notification is considered to be performed within a larger advertisement domain. At this time, a long task scheduling distance is tolerable. When the network status in the region is bad and the network delay is high, the advertisement domain is considered to be reduced. At this time, merely a short task scheduling distance is tolerable.

Alternatively, the notification range is also defined in accordance with the service deployment information.

During the implementation, when the advertisement domain is divided in accordance with the service, the size of the advertisement domain is determined in accordance with the number of nodes deployed in the advertisement domain.

To be specific, for example, when more nodes have been deployed for a certain service within a certain range, the notification range is small, and when fewer nodes have been deployed, the notification range is expanded so as to ensure load balance among the nodes.

### (2) Issuing the advertisement domain division policy.

During the implementation, the advertisement domain division policy carried in Netconf and a Yang management protocol is issued.

To be specific, NETCONF/YANG is carried in a management protocol. NETCONF/YANG is an interaction protocol between the central controller and a network device, and a Yang model is a method for uniformly modeling reported information.

During the implementation, the advertisement domain division policy is generated after the central controller has received the network status information, the service deployment information and a capability list generated by an inter-domain router and has subscribed the network status information or the service deployment information about a node in accordance with different advertisement domain division policies, and issued to the inter-domain router for configuration.

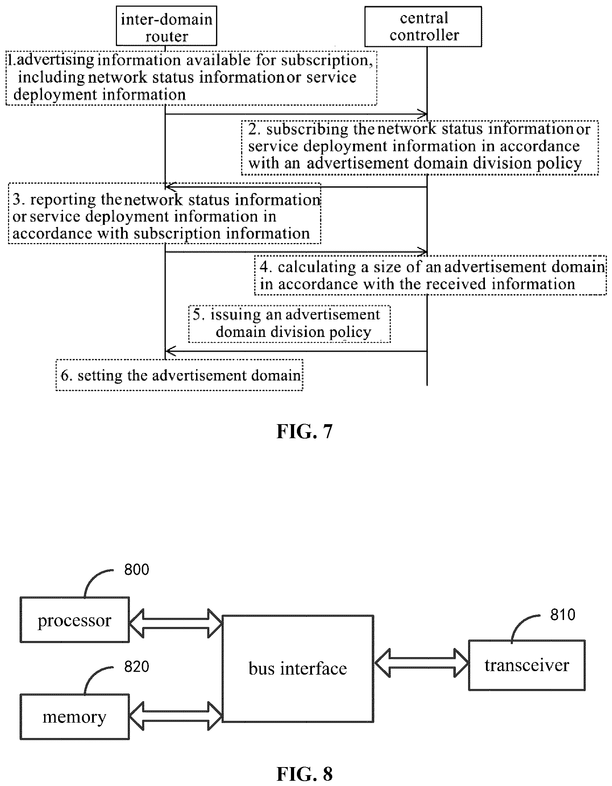

FIG. 7 illustratively shows the interaction between a device (the network device) and a controller (the central controller) through NETCONF/YANG. As shown in FIG. 7, the inter-domain router generates the network status information, the service deployment information, and a capability list. Upon the receipt of the capability list, the controller (the central controller) subscribes the network status information or the service deployment information in accordance with different advertisement domain division policies, and then relevant information is reported by the device (the network device). The central controller calculates the size of the advertisement domain in accordance with the received information, and issues the advertisement domain division policy to the inter-domain router. Upon the receipt of the advertisement domain division policy, the inter-domain router performs local configuration. To be specific, the procedure includes the following steps: Step 1 of advertising information available for subscription, including the network status information or the service deployment information; Step 2 of subscribing the network status information or service deployment information in accordance with the advertisement domain division policy; Step 3 of reporting the network status information or service deployment information in accordance with subscription information; Step 4 of calculating the size of the advertisement domain in accordance with the received information; Step 5 of issuing the advertisement domain division policy; and Step 6 of setting the advertisement domain.

### (3) The notification range is dynamically adjusted in accordance with the network status information or service deployment information.

During the implementation, when adjusting the size of the advertisement domain, the information advertisement method further includes issuing an advertisement domain adjustment policy carried in Netconf and the Yang management protocol in accordance with one or more of the network status information, result feedback information about service scheduling, or a service deployment condition.

To be specific, the notification range is adjusted in accordance with the network status information, and the advertisement domain adjustment policy is also issued through Netconf and the Yang management protocol. Alternatively, the notification range is adjusted in accordance with the result feedback information about service scheduling. To be specific, a service scheduling result is obtained, and the notification range is expanded or reduced in accordance with whether the service scheduling result meets a service requirement.

The identification of the notification range, i.e., how to enable the AS domain to identify the advertisement domain, will be described hereinafter.

During the implementation, the range of the advertisement domain is identified through: setting the number of ASs through which computing update information passes, and identifying the range of the advertisement domain through setting a hop limit; or identifying the range of the advertisement domain through dividing routers for a same advertisement domain as a same community in accordance with a BGP community identity.

To be specific, the range of the advertisement domain is identified at least in the following two ways.
1. The number of ASs through which the computing update information passes and the hop limit are set, and each time the computing update information passes an AS, the hop limit is reduced by 1, so as to control the advertisement domain for the computing information.
2. The routers for a same advertisement domain are divided as a same community in accordance with the BGP community identity, so as to identify the advertisement domain.

Based on a same inventive concept, the present disclosure further provides in some embodiments a controller and a computer-readable storage medium. A principle of these devices for solving the problem is similar to that of the above-mentioned method, so the implementation of these devices may refer to that of the method, which will not be particularly defined herein.

The technical solutions in the embodiments of the present disclosure will be described as follows.

As shown in FIG. 8, the present disclosure provides in some embodiments a controller, which includes: a processor 800 configured to read a program in a memory 820, so as to determine an advertisement domain and notify a node in the advertisement domain of computing information; and a transceiver 810 configured to transmit and receive data under the control of the processor 800.

In a possible embodiment of the present disclosure, the central controller determines the advertisement domain in accordance with a computing service topology. The computing service topology is generated through: generating service topology information including computing service identification information and location information about computing service deployment, and advertising the service topology information; and advertising status information about a service on an established service topology.

In a possible embodiment of the present disclosure, the service topology information is advertised through a BGP-LS and a DHCP.

In a possible embodiment of the present disclosure, the service topology information is advertised between nodes after computing service information is added in a node attribute field.

In a possible embodiment of the present disclosure, the computing service topology is generated in accordance with a network topology and a computing node topology generated through the BGP-LS.

In a possible embodiment of the present disclosure, the processor is further configured to, when a service request needs to be scheduled, select a computing node which needs to obtain real-time service status information through the generated computing service topology, and send a detection packet of service status information.

In a possible embodiment of the present disclosure, adjacent domains are divided as the advertisement domain in accordance with a geographical location, and/or domains where a same service is deployed are divided as the advertisement domain with the service as a dimension.

In a possible embodiment of the present disclosure, when the advertisement domain is divided in accordance with the geographical location, a notification relation between AS domains in an IP is determined in accordance with the existing division of the AS domains.

In a possible embodiment of the present disclosure, the processor is further configured to obtain an AS domain division policy for an entire network, and determine a size of the advertisement domain in accordance with network status information about different domains, and the network status information is reported by a node to the central controller.

In a possible embodiment of the present disclosure, when determining the size of the advertisement domain, the advertisement domain is expanded in the case of a good network status and reduced in the case of a bad network status in accordance with the network status information.

In a possible embodiment of the present disclosure, when the advertisement domain is divided in accordance with the service, the size of the advertisement domain is determined in accordance with the number of nodes deployed in the advertisement domain.

In a possible embodiment of the present disclosure, the processor is further configured to issue an advertisement domain division policy carried in Netconf and a Yang management protocol.

In a possible embodiment of the present disclosure, the advertisement domain division policy is generated after the central controller has received the network status information, the service deployment information and a capability list generated by an inter-domain router and has subscribed the network status information or the service deployment information about a node in accordance with different advertisement domain division policies, and issued to the inter-domain router for configuration.

In a possible embodiment of the present disclosure, when adjusting the size of the advertisement domain, the processor is further configured to issue an advertisement domain adjustment policy carried in Netconf and the Yang management protocol in accordance with one or more of the network status information, result feedback information about service scheduling, or a service deployment condition.

In a possible embodiment of the present disclosure, a range of the advertisement domain is identified through: setting the number of ASs through which computing update information passes, and identifying the range of the advertisement domain through setting a hop limit; or identifying the range of the advertisement domain through dividing routers for a same advertisement domain as a same community in accordance with a BGP community identity.

In FIG. 8, bus architecture may include a number of buses and bridges connected to each other, so as to connect various circuits for one or more processors 800 and one or more memories 820. In addition, as is known in the art, the bus architecture may be used to connect any other circuits, such as a circuit for a peripheral device, a circuit for a voltage stabilizer and a power management circuit. A bus interface may be provided, and the transceiver 810 may consist of a plurality of elements, i.e., a transmitter and a receiver for communication with any other devices over a transmission medium. The processor 800 may take charge of managing the bus architecture as well as general processings. The memory 820 may store therein data for the operation of the processor 800.

The present disclosure further provides in some embodiments a controller, which includes: a notification module configured to determine an advertisement domain; and a notification module configured to notify a node in the advertisement domain of computing information.

In a possible embodiment of the present disclosure, the determination module is further configured to determine the advertisement domain in accordance with a computing service topology. The computing service topology is generated through: generating service topology information including computing service identification information and location information about computing service deployment, and advertising the service topology information; and advertising status information about a service on an established service topology.

In a possible embodiment of the present disclosure, the notification module is further configured to notify the service topology information through a BGP-LS and a DHCP.

In a possible embodiment of the present disclosure, the notification module is further configured to notify the service topology information nodes after computing service information is added in a node attribute field.

In a possible embodiment of the present disclosure, the determination module is further configured to generate the computing service topology in accordance with a network topology and a computing node topology generated through the BGP-LS.

In a possible embodiment of the present disclosure, the notification module is further configured to, when a service request needs to be scheduled, select a computing node which needs to obtain real-time service status information through the generated computing service topology, and send a detection packet of service status information.

In a possible embodiment of the present disclosure, the determination module is further configured to divide adjacent domains as the advertisement domain in accordance with a geographical location, and/or divide domains where a same service is deployed as the advertisement domain with the service as a dimension.

In a possible embodiment of the present disclosure, the notification module is further configured to, when the advertisement domain is divided in accordance with the geographical location, determine a notification relation between AS domains in an IP in accordance with the existing division of the AS domains.

In a possible embodiment of the present disclosure, the determination module is further configured to obtain an AS domain division policy for an entire network, and determine a size of the advertisement domain in accordance with network status information about different domains, and the network status information is reported by a node to the central controller.

In a possible embodiment of the present disclosure, the determination module is further configured to, when determining the size of the advertisement domain, expand the advertisement domain in the case of a good network status and reduce the advertisement domain in the case of a bad network status in accordance with the network status information.

In a possible embodiment of the present disclosure, the determination module is further configured to, when the advertisement domain is divided in accordance with the service, determine the size of the advertisement domain in accordance with the number of nodes deployed in the advertisement domain.

In a possible embodiment of the present disclosure, the notification module is further configured to issue an advertisement domain division policy carried in Netconf and a Yang management protocol.

In a possible embodiment of the present disclosure, the notification module is further configured to generate the advertisement domain division policy after the central controller has received the network status information, the service deployment information and a capability list generated by an inter-domain router and has subscribed the network status information or the service deployment information about a node in accordance with different advertisement domain division policies, and issue the advertisement domain division policy to the inter-domain router for configuration.

In a possible embodiment of the present disclosure, the notification module is further configured to, when adjusting the size of the advertisement domain, issue an advertisement domain adjustment policy carried in Netconf and the Yang management protocol in accordance with one or more of the network status information, result feedback information about service scheduling, or a service deployment condition.

In a possible embodiment of the present disclosure, the notification module is further configured to identify a range of the advertisement domain through: setting the number of ASs through which computing update information passes, and identifying the range of the advertisement domain through setting a hop limit; or identifying the range of the advertisement domain through dividing routers for a same advertisement domain as a same community in accordance with a BGP community identity.

For ease of description, the components of the device are divided into various modules or units on the basis of their functions. Of course, during the implementation, the functions of the modules or units may be achieved in one or more pieces of software or hardware.

The present disclosure further provides in some embodiments a computer-readable storage medium storing therein a computer program. The computer program is executed so as to implement the above-mentioned information advertisement method.

The implementation of the computer-readable storage medium may refer to that of the above-mentioned information advertisement method.

In a word, according to the embodiments of the present disclosure, a scheme for generating the computing service topology in phases. The service topology is decoupled from the computing topology, so as to provide a scheduling basis for a computing perception network in the service dimension.

In addition, the computing information is advertised on a domain basis, and the range and region where the computing information is advertised are taken into consideration, so as to reduce the amount of futile notification information in the network, and achieve fine management on a notification range of the network information, thereby to improve a network resource utilization rate and an active bandwidth utilization rate.

To be specific, when the service topology is decoupled from the computing topology, the network obtains the deployment information about the services on the entire network at first, without any necessity to know real-time status information about the service. When there is a service request, the network obtains the service status information in time, so it is able to reduce the amount of information in the network.

After the generation of the service topology, the division of the advertisement domain is performed in accordance with a service delay requirement or performed with the service as a dimension, so as to facilitate the subsequent notification on a domain basis.

Through the notification on a domain basis, it is able to notify the service information accurately, and reduce the amount of futile notification information in the network, thereby to improve the network resource utilization rate.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An information advertisement method, comprising:
determining, by a central controller, an advertisement domain; and
advertising, by the central controller, a node in the advertisement domain of computing information.

2. The information advertisement method according to claim 1, wherein the central controller determines the advertisement domain in accordance with a computing service topology, wherein the computing service topology is generated through: generating service topology information comprising computing service identification information and location information about computing service deployment, and advertising the service topology information.

3. The information advertisement method according to claim 2, wherein the computing service topology is generated in accordance with a network topology and a computing node topology generated through a Border Gateway Protocol-Link State (BGP-LS).

4. The information advertisement method according to claim 2, wherein the service topology information is advertised through a BGP-LS and a Dynamic Host Configuration Protocol (DHCP).

5. The information advertisement method according to claim 2, wherein the service topology information is advertised between nodes after computing service information is added in a node attribute field.

6. The information advertisement method according to claim 2, further comprising, when a service request needs to be scheduled, selecting, by the central controller, a computing node which needs to obtain real-time service status information through the generated computing service topology, and sending a detection packet of service status information.

7. The information advertisement method according to claim 1, wherein adjacent domains are divided as the advertisement domain in accordance with a geographical location, and/or domains where a same service is deployed are divided as the advertisement domain with the service as a dimension.

8. The information advertisement method according to claim 7, wherein when the advertisement domain is divided in accordance with the geographical location, a notification relation between Autonomous System (AS) domains in an Internet Protocol (IP) is determined in accordance with existing division of the AS domains.

9. The information advertisement method according to claim 8, further comprising obtaining, by the central controller, an AS domain division policy for an entire network, and determining a size of the advertisement domain in accordance with network status information about different domains, wherein the network status information is reported by a node to the central controller.

10. The information advertisement method according to claim 9, wherein when determining the size of the advertisement domain, the advertisement domain is expanded in the case of a good network status and reduced in the case of a bad network status in accordance with the network status information.

11. The information advertisement method according to claim 7, wherein when the advertisement domain is divided in accordance with the service, the size of the advertisement domain is determined in accordance with the number of nodes deployed in the advertisement domain.

12. The information advertisement method according to claim 1, further comprising issuing an advertisement domain division policy carried in Netconf and a Yang management protocol.

13. The information advertisement method according to claim 12, wherein the advertisement domain division policy is generated after the central controller has received the network status information and the service deployment information generated by an inter-domain router and has subscribed the network status information or the service deployment information about a node in accordance with different advertisement domain division policies, and issued to the inter-domain router for configuration.

14. The information advertisement method according to claim 13, wherein when adjusting the size of the advertisement domain, the information advertisement method further comprises issuing an advertisement domain adjustment policy carried in Netconf and the Yang management protocol in accordance with one or more of the network status information, result feedback information about service scheduling, or a service deployment condition.

15. The information advertisement method according to claim 1, wherein a range of the advertisement domain is identified through: setting the number of ASs through which computing update information passes, and identifying the range of the advertisement domain through setting a hop limit; or identifying the range of the advertisement domain through dividing routers for a same advertisement domain as a same community in accordance with a BGP community identity.

16. A controller, comprising: a processor configured to read a program in a memory so as to determine an advertisement domain and notify a node in the advertisement domain of computing information; and a transceiver configured to transmit and receive data under the control of the processor.

17. A controller, comprising: a notification module configured to determine an advertisement domain; and a notification module configured to notify a node in the advertisement domain of computing information.

18. A computer-readable storage medium storing therein a computer program, wherein the computer program is executed so as to implement the information advertisement method according to any one of claims 1 to 15.
